# EUROPEAN PATENT SPECIFICATION

(11) **EP 3 306 093 B1**
(45) Date of publication and mention of the grant of the patent: **13.11.2019**
(21) Application number: 17192775.9
(22) Date of filing: 22.09.2017
(51) Int. Cl.: F04C 2/18, F04C 15/00

(54) **GEAR PUMP BEARING**
ZAHNRADPUMPENLAGER
PALIER DE POMPE À ENGRENAGE

(30) Priority: 07.10.2016 GB 201617119
(43) Date of publication of application: 11.04.2018
(73) Proprietor: Rolls-Royce PLC, London SW1E 6AT (GB)
(72) Inventor: YATES, Martin K,, Derby, Derbyshire DE24 8BJ (GB)
(74) Representative: Mewburn Ellis LLP

(56) References cited:
- EP-A1- 1 589 226
- GB-A- 840 000
- US-A- 2 695 566
- US-A- 5 028 221
- US-A- 5 110 269
- US-A1- 2010 266 437

## Description

### Field of the Invention

The present invention relates to gear pump bearings. In particular, but not exclusively, the invention relates to improvements in gear pump bearings for use in aero-engine fuel supply systems.

### Background

In a gas turbine engine fuel delivery system, pump assemblies, as shown for example in US 2005/0232784, are typically used for pumping the fuel. Where such assemblies include gear pump, gear elements are commonly supported by bearing blocks which are adapted to receive respective bearing shafts of the gears through a bore of each bearing block. These bearing blocks also typically abut axially-directed faces of respective gears of the pumps. The bearing blocks may be for solid bearings, or pressure-loaded bearings. A solid bearing typically transfers load from journals to the pump housing, and additionally can transfer axial load to the housing. Pressure-loaded bearings also transfer load from journals to housing, and in addition can provide an axial force and a moment against the axially-directed face of the gear which the bearing block abuts.

Thus in aero-engine twin pinion gear fuel pumps, pressure-loaded bearings provide axial load, which can help to ensure that the thrust faces of the pressure-loaded and solid bearing blocks are loaded against the respective side faces of the gears. Contact of the thrust faces with the side faces of their respective gears over the operating envelope is generally advantageous for the reason that internal pump leakage may be minimised. Such minimisation may be important at low speeds associated with windmill relight, where achieving low leakage can reduce the required pump size and/or weight. However, if too high a load is generated between the thrust faces and the gear side faces during operation, for example during high speed conditions, wear, overheating and possible pump seizure can occur.

In conventional gear pump bearings, the axial load applied to a given gear side face is produced by a nest of springs and a hydraulic load on the rear face of the respective pressure loaded bearing block. This hydraulic load results from partitioning the bearing block rear face, e.g. using an offset nose with a ring seal, such that an area inside the seal is exposed to gear inlet pressure and a crescent shape region outside the seal is exposed to gear delivery pressure.

Passages in the pump body port the inlet pressure to the area inside the seal, whilst the delivery pressure is ported to the area outside the seal via a groove machined along the outside of the bearing block. Thus once the seal diameter and spring load have been selected there is a fixed relationship between axial load produced by a pressure-loaded block and the pressure rise acting across a gear stage of the pump.

This results in performance compromises. For example, a lower than desired clamping load may be produced at the windmill relight low speed start condition (where low leakage is typically required), to ensure that at the take-off condition the clamping load is not too high, since a high clamping load in conjunction with high speed at the take-off condition can result in excessive wear, heat generation and potential pump seizure.

Selecting the correct combination of seal diameter and spring load represents a significant design challenge as the loads acting to separate the bearing blocks from the gear side faces are difficult to predict accurately. The net design clamping load between gear side face and thrust faces is a small proportion of the absolute load separating and clamping the pressure-loaded blocks, thus small errors in the calculation of these loads results in large errors in the resultant net load.

Additionally, once a pump has been manufactured it is not easy to 'tune' these loads without incurring other undesirable consequences such as, e.g., cavitation on the thrust faces and formation of possible weak points in the pump housing between the offset noses.

US 5110269 proposes a fuel pumping apparatus. US 2010/0266437 proposes a multi-stage gear pump assembly. US 5028221 proposes a hydraulic generator-receiver.

### Summary

The present invention aims to address one or more of the above problems.

Thus, in a first aspect, the present invention provides a gear pump according to claim 1. The present invention is thereby advantageously able to provide active axial loading of the gear pump bearing block. That is, by adjusting the fluid pressure in the higher pressure portion of the rear face of the bearing block, the hydraulic load which urges the thrust face of the bearing block towards the side surface of the gear is correspondingly varied. This is beneficial as the clamping load performance compromise discussed above in relation to conventional gear pump bearing blocks may be avoided, and more optimal clamping loads can be applied across all operating conditions, e.g. both low speed start conditions, and also at high speed take-off conditions.

Additionally, the present invention offers the advantage that by lowering the regulated pressure to be close, or equal to, that of the lower fluid pressure portion (e.g. a gear stage inlet pressure), the bearing block thrust face can be made to separate from the gear side surface. This results in high internal leakage and can be used to limit maximum pump delivery pressure if there is a restriction develops downstream of the pump.

Furthermore, the present invention also offers advantages for pump development testing, as the appropriate clamping forces can be 'tuned' through control of the pressure regulation valve instead of having to provide new housings and bearings for every change in hydraulic load that is to be tested.

In a second aspect, the present invention provides a fuel supply system of a gas turbine engine having the gear pump of the first aspect for pumping fuel. The system may further have an electronic controller (e.g. an engine electronic controller) for controlling the pressure regulating valve of the gear pump, or the pressure regulating valve of the gear pump may be controlled by the pressure rise across a gear stage of the pump or by a gear stage inlet pressure. For example, the gear stage inlet pressure may be that provided by a centrifugal pump, which can be on the same drive-line as the gear stage. As the drive-line speed is typically proportional to engine speed (e.g. the drive-line can be driven by an engine accessory gearbox, which in turn is driven by the engine), such a pressure control signal can provide a measure of engine speed, the centrifugal pump pressure rise being approximately equal to (centrifugal pump speed)². Thus generally the fuel supply system may have a controller (whether in the form of e.g. a separate electronic controller, or suitable lines conveying fuel system pressure signals to the pressure regulating valve) which controls the pressure regulating valve to adjust the fluid pressure difference between the higher and lower fluid pressure portions of the rear face of the bearing blocks. Preferably the adjustment of the fluid pressure difference in this way is continuous, i.e. so that the fluid pressure difference can be adjusted to take any value over a continuous range of possible values. The hydraulic load can thus similarly be varied to take any value over a continuous range of possible values, thereby enabling the hydraulic load to be set as may best optimise the clamping load for a given operating condition.

In a third aspect, the present invention provides a gas turbine engine having the fuel supply system of the second aspect.

Optional features of the invention will now be set out. These are applicable singly or in any combination with any aspect of the invention.

Conveniently, the seal can be a ring seal.

A nose may be formed in the rear face, wherein the nose carries the seal. For example, the nose may be an offset nose.

Conveniently, the fluid pressure in the higher fluid pressure portion of the rear face of the bearing block is adjustable by the valve to vary said hydraulic load. The pressure in the lower fluid pressure portion can thus be a reference pressure.

The pressure regulating valve may be a variable restrictor valve, such as a piston-in-sleeve valve.

The fluid pressure in the higher fluid pressure portion is adjustable by the valve between the gear stage inlet pressure and the gear stage delivery pressure. In other words, the fluid pressure in the higher fluid pressure portion may take any intermediate value between the gear stage inlet pressure and the gear stage delivery pressure, or may be equal to the gear stage inlet pressure or to the gear stage delivery pressure. Each gear stage has a pair of meshing gears, with the shafts of the two gears being supported by respective of the pressure-loaded bearing blocks.

The higher pressure portion of the rear face of the bearing block may be located radially outwardly of the ring seal carried by the offset nose of the bearing block. This portion may be a crescent-shaped portion.

The gear pump is configured to port fluid at the gear stage inlet pressure to the lower fluid pressure portion of the rear face of the bearing block.

The gear pump may be configured to port fluid at the gear stage delivery pressure to the higher fluid pressure portion of the rear face of the bearing block via a fixed area restrictor. In this way, the fluid pressure at the higher fluid pressure portion can be intermediate the gear stage inlet pressure and the gear stage delivery pressure.

The pressure-loaded gear pump bearing block may further have resiliently biasing members disposed on the rear face of the bearing block which provide an additional force urging the thrust face of the bearing block towards the side surface of the gear. In such a gear pump bearing block, the, or each, resiliently biasing member(s) may be a helical spring. The, or each, such helical spring may be set into a respective recess formed in the rear face of the pressure-loaded bearing block.

Whilst it is envisaged that the present invention may find use in the context of a fuel supply system for a gas turbine engine, the present invention may equally be applied to any gear pump that uses hydraulically loaded bearings (e.g. hydraulic pumps and oil pumps used in aerospace and other industries).

### Brief Description of the Drawings

Embodiments of the invention will now be described by way of example with reference to the accompanying drawings in which:
Figure 1 shows a longitudinal cross-section through a ducted fan gas turbine engine;
Figure 2 shows a cut away perspective view of the interior of a pump assembly of the ducted fan gas turbine engine;
Figure 3 shows an exploded perspective view of some components of the pump assembly;
Figure 4 shows a perspective view of a pressure-loaded bearing block set; and
Figure 5 shows a schematic cross-section through part of a gear pump, showing a comparison between pressure regions for a gear pair having conventional pressure-loaded bearing blocks (above marked centreline), and pressure regions for a gear pair in a pump of the present invention (below marked centreline).

### Detailed Description and Further Optional Features

Although a gear pump and fuel delivery system of the present invention may be used in various applications, a significant intended use is in an aircraft fuel supply system, and the invention will be described hereafter in relation to such a system.

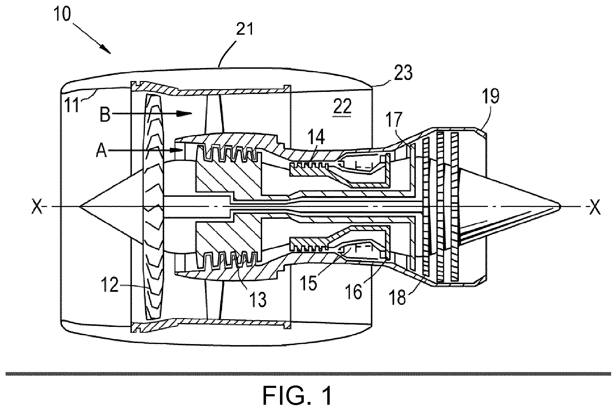

With reference to Figure 1, a ducted fan gas turbine engine incorporating the invention is generally indicated at 10 and has a principal and rotational axis X-X. The engine comprises, in axial flow series, an air intake 11, a propulsive fan 12, an intermediate pressure compressor 13, a high-pressure compressor 14, combustion equipment 15, a high-pressure turbine 16, an intermediate pressure turbine 17, a low-pressure turbine 18 and a core engine exhaust nozzle 19. A nacelle 21 generally surrounds the engine 10 and defines the intake 11, a bypass duct 22 and a bypass exhaust nozzle 23.

During operation, air entering the intake 11 is accelerated by the fan 12 to produce two air flows: a first air flow A into the intermediate-pressure compressor 13 and a second airflow B which passes through the bypass duct 22 to provide propulsive thrust. The intermediate-pressure compressor 13 compresses the air flow A directed into it before delivering that air to the high-pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines respectively drive the high and intermediate-pressure compressors 14, 13 and the fan 12 by suitable interconnecting shafts.

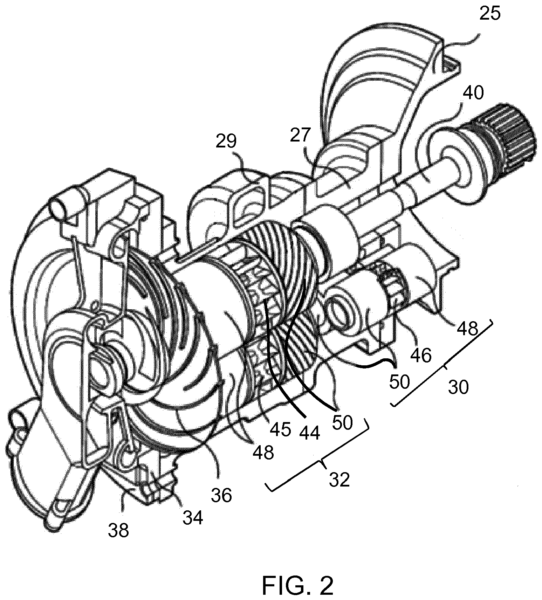

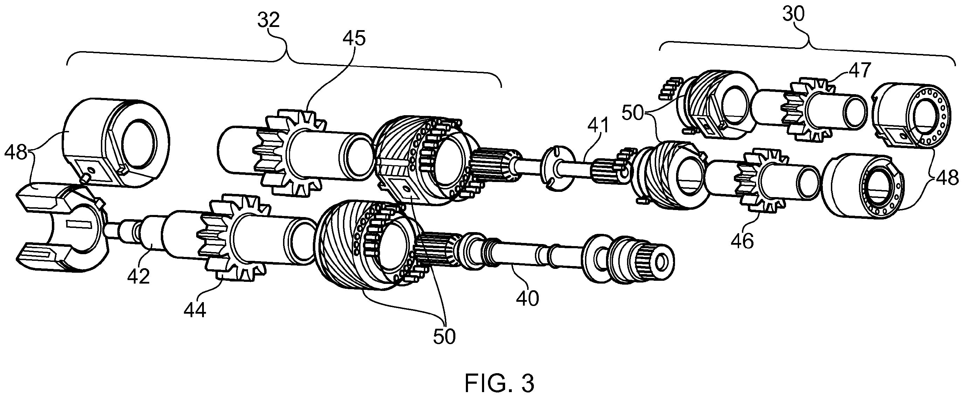

Figure 2 shows a cut away perspective view of the interior of a dual stage pump assembly of a fuel supply system of the engine 10, and Figure 3 shows an exploded perspective view of displacement gear components of the assembly of Figure 2. The pump assembly has in sequence: an outer casing comprising a mounting flange 25; a housing 27 for a smaller primary displacement gear pump 30; a housing 29 for a larger secondary displacement gear pump 32; a centrifugal stage back plate 34 which acts as an end cover for the housing 29 and additionally as a back plate for a centrifugal pump 36; and finally at the end of the casing remote from the mounting flange 25 a low pressure stage housing 38 for the centrifugal pump 36, this housing including the centrifugal pump inlet. The centrifugal pump forms the low pressure stage of the dual stage pump assembly, and the two gear pumps form the high pressure stage of the assembly. Typically, the small primary displacement pump 30 is pressurised at all flight conditions, while the large secondary displacement pump 32 is pressurised for high power (above cruise) conditions, and for low speed starting.

A drive shaft 40 which accepts power from an engine accessory gearbox (not shown) has male spline couplings at each end. The drive shaft 40 accommodates for misalignment and connects directly into a driver gear 44 of the secondary gear pump 32, and continues via a linking drive shaft 42 to the impeller and inducer of the centrifugal pump 36. A secondary drive shaft 41 transfers power from the secondary pump to the primary pump 30 and also accommodates for misalignment. More particularly, one splined end of the secondary drive shaft is engaged internally with the driven gear 45 of the larger, secondary displacement pump, whilst its opposite splined end is engaged internally with the driver gear 46 of the smaller, primary gear pump, which drives the driven gear 47 of the primary gear pump.

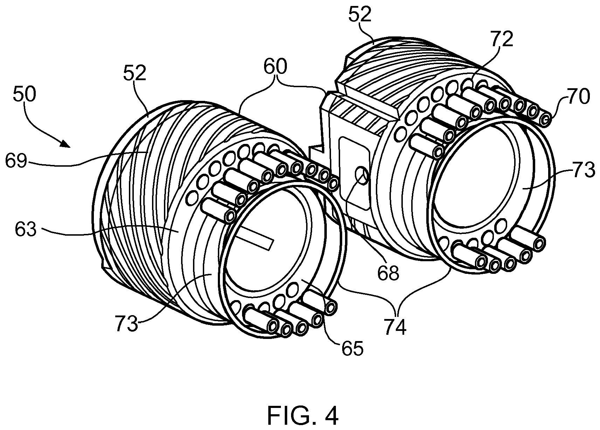

Each displacement pump gear 44-47 has a respective solid bearing block 48 and a respective pressure-loaded bearing block 50 which are adapted to receive a bearing shaft or journal of the gear. The present invention relates to pressure-loaded bearing blocks, such bearing blocks being shown in greater detail in Figure 4.

Figure 4 shows a perspective view of two pressure-loaded bearing blocks 50 which form a pressure-loaded bearing set. Each bearing block of the set has a bush 52, typically formed of antifriction alloy (e.g. lead bronze), the bush having a cylindrical portion providing a bore adapted to receive the bearing shaft of the respective gear, and further having a flange portion extending radially outwardly at an end of the cylindrical portion to provide a thrust face (not visible) adapted to slidingly engage with a side surface of the gear. Each block also has a backing layer 60 covering a radially outer surface of the cylindrical portion and a rear surface of the flange portion, the backing layer being formed of relatively less dense alloy (e.g. aluminium alloy) compared to the antifriction alloy. The bore and thrust face may be e.g. lead-indium plated or coated with dry film lubricant to improve tribological compatibility. The bearing block has a rear face, at an opposite end of the block to the thrust face provided by the bush of the bearing block.

A dowel between the bearing blocks engages with corresponding recesses 68 in the sides of the blocks to limit relative movement of the blocks. Spiralling grooves 69 are formed in the radially outer surface of the block bushes. These provide space for contaminants, and may also help to ensure relatively free axial movement of the bearing blocks.

Helical springs 70 are set into respective recesses 72 in the rear face of each pressure-loaded bearing block 50. These springs provide mechanical load to increase the clamping force between the bearing thrust faces and respective side surfaces of the gears. 'O' ring seals 74 are also provided at the rear face of the bearing blocks to partition between higher fluid pressure portions 63 radially outwards of the ring seal and lower fluid pressure portions 65 radially inwards of the ring seal. These seals may also be described as 'diametric seals'. Each seal is carried by an offset nose 73 of the block, with the spring recesses at one side of the block being formed in the nose and the spring recesses at the other side of the block being formed outside the nose. This non-axisymmetric arrangement produces a balancing moment on each bearing block.

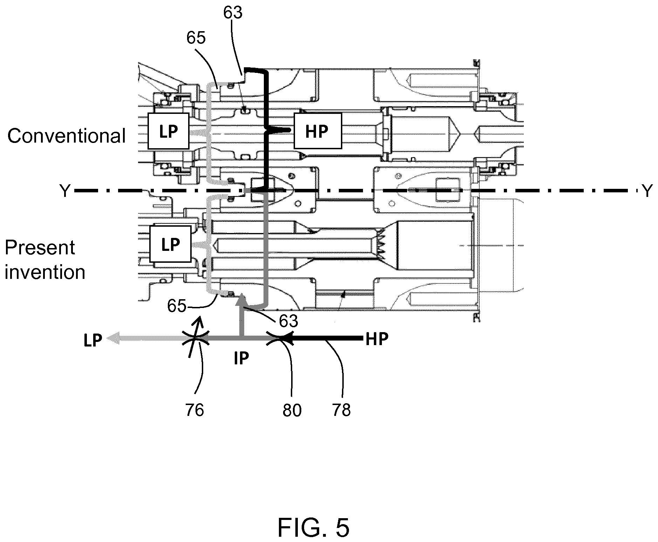

The gear pump is adapted such that, in use, pressurised fluid is supplied to the higher pressure portion 63 of the rear face of each bearing block 50 to provide the hydraulic load urging the thrust face of the bearing block towards the side surface of the gear. Figure 5 shows a schematic cross-section through part of a gear pump, showing a comparison between pressure regions for a gear pair having conventional pressure-loaded bearing blocks (above centreline Y-Y), and pressure regions for a gear pair in a pump of the present invention (below the centreline). In the conventional pressure-loaded bearing blocks, the pressurised fluid is at the gear stage discharge pressure (high pressure HP) and is supplied to the higher pressure portion 63 by 'vee' grooves formed in the radially outer surface of the bush. However, such grooves are not necessary in the present invention, because fluid at a regulated pressure is ported to the rear face of the bearing blocks via passageways 78 in the housing 29. A fixed area restrictor 80 may be provided at the end of the passageways 78 to produce a step down in pressure from HP to the regulated pressure. A pressure regulating valve 76 then independently controls the regulated pressure to be at an intermediate pressure (IP) between HP and the gear stage inlet pressure (low pressure LP). In other words, the pressure regulating valve controls the pressure difference between IP and LP, with LP serving as a reference pressure. When the valve is fully closed, IP can be made to rise to HP (i.e. the step down across the fixed area restrictor becomes zero), while when the valve is fully open IP can be made to drop to LP. In both the conventional arrangement and the present invention, fluid at LP is ported to the lower fluid pressure portion 65 of the rear face of the bearing block.

The pressure regulating valve may be a variable restrictor valve, such as a piston-in-sleeve type valve. Conveniently, the valve may be controlled by inputs from an electronic engine controller of the engine. Another option is for the valve to be controlled by the pressure rise across the high pressure gear stage of the pump, or by the gear stage inlet pressure, which is provided by the low pressure centrifugal pump stage on the same drive-line.

By providing a pump as described above, the axial loading of the bearing blocks 50 may therefore be adjusted during operation of the engine by regulation of the fluid pressure at the higher fluid pressure portions 63 at the rear faces of the bearing blocks. In particular, the fluid pressure can be regulated to take any value in a continuous range from HP to LP. Accordingly, improved clamping loading conditions may be achieved across the operating envelope of the gear pump. For example, the clamping load can be increased at the windmill relight low speed start condition to reduce pump leakage, and decreased at the high speed take-off condition to reduce wear and heat generation in the pump assembly. Also, in the event of a blockage forming downstream of the pump assembly, the pressure on the higher fluid pressure portions 63 can be reduced by the pressure regulating valve 76 to LP, thereby increasing pump leakage and limiting maximum pump delivery pressure.

Although described above in relation to a dual stage gear pump, the invention may be applied to e.g. a single stage gear pump.

While the invention has been described in conjunction with the exemplary embodiments described above, many modifications and variations will be apparent to those skilled in the art when given this disclosure. Accordingly, the exemplary embodiments of the invention set forth above are considered to be illustrative and not limiting.

## Claims

1. A gear pump having at least one gear stage including a pair of meshing gears (44, 45; 46, 47) with bearing shafts of the meshing gears supported by respective pressure-loaded gear pump bearing blocks (50), each pressure-loaded bearing block having:
a bore adapted to receive the bearing shaft of a gear of the pump;
a thrust face at one end adapted to slidingly engage with a side surface of the gear, and an opposing rear face at the other end, the pump being adapted such that, in use, pressurised fluid is supplied to the rear face to provide a hydraulic load urging the thrust face of the bearing block towards the side surface of the gear; and
a seal (74) carried by the rear face, the seal, in use, partitioning higher fluid pressure (63) and lower fluid pressure (65) portions of the rear face;
wherein the gear pump further has a pressure regulating valve (76);
**characterised in that**:
the gear pump is configured to port fluid at an inlet pressure of the gear stage to the lower fluid pressure portion of the rear face of each bearing block; and
the pressure regulating valve (76) is arranged such that, in use, the fluid pressure in the higher fluid pressure portion is adjustable by the pressure regulating valve between the inlet pressure and a delivery pressure of the gear stage to vary said hydraulic load.

2. A gear pump according to claim 1 wherein a nose is formed in the rear face, the nose carrying the seal.

3. A gear pump according to claim 1 or 2 wherein the fluid pressure in the higher fluid pressure portion of the rear face of the bearing block is adjustable by the valve to vary said hydraulic load.

4. A gear pump according to any one of the above claims wherein the pressure regulating valve is a variable restrictor valve.

5. A gear pump according to any one of the above claims wherein the higher fluid pressure portion is located radially outwardly of the seal.

6. A gear pump according to any one of the above claims wherein the pressure-loaded gear pump bearing block further has one or more resiliently biasing members (70) disposed on the rear face of the bearing block which provide an additional force urging the thrust face of the bearing block towards the side surface of the gear.

7. A gear pump according to claim 6 wherein the, or each, resiliently biasing member is a helical spring.

8. A gear pump according to claim 7 wherein the, or each, spring is set into a respective recess (72) formed in the rear face of the pressure-loaded bearing block.

9. A fuel supply system of a gas turbine engine having the gear pump according to any one of the above claims for pumping fuel.

10. A fuel supply system according to claim 9, further having a controller for controlling the pressure regulating valve to adjust the fluid pressure in the higher fluid pressure portion so that the fluid pressure in the higher fluid pressure portion can take any value in a continuous range from the inlet pressure to the delivery pressure of the gear stage.

11. A fuel supply system according to claim 9, further having an electronic controller for controlling the pressure regulating value of the gear pump.

12. A fuel supply system according to claim 9, wherein the pressure regulating valve of the gear pump is controlled by the pressure rise across a gear stage of the pump.

13. A fuel supply system according to claim 9 wherein the pressure regulating valve of the gear pump is controlled by a gear stage inlet pressure.

14. A gas turbine engine (10) having the fuel supply system of any one of claims 9 to 13.

## Patentansprüche

1. Zahnradpumpe mit mindestens einer Zahnradstufe, die ein Paar von kämmenden Zahnrädern (44, 45; 46, 47) mit Lagerwellen der kämmenden Zahnräder, die durch jeweilige druckbelastete Zahnradpumpenlagerblöcke (50) gelagert sind, umfasst, wobei jeder druckbelastete Lagerblock Folgendes aufweist:
eine Bohrung, die geeignet ist, die Lagerwelle eines Zahnrads der Pumpe aufzunehmen;
eine Schubfläche an einem Ende, die geeignet ist, mit einer Seitenfläche des Zahnrads verschiebbar in Eingriff zu sein, und eine entgegengesetzte Rückseitenfläche an dem anderen Ende, wobei die Pumpe derart ausgelegt ist, dass bei Verwendung unter Druck stehendes Fluid der Rückseitenfläche zugeführt wird, um eine Hydrauliklast bereitzustellen, um die Schubfläche des Lagerblocks in Richtung der Seitenfläche des Zahnrads zu drücken; und
eine Abdichtung (74), die von der Rückseitenfläche getragen wird, wobei die Abdichtung bei Verwendung höhere Fluiddruck (63)- und niedrigere Fluiddruck (65) - Abschnitte der Rückseitenfläche unterteilt;
wobei die Zahnradpumpe ferner ein Druckregelventil (76) aufweist;
**dadurch gekennzeichnet,**
**dass** die Zahnradpumpe konfiguriert ist, Fluid bei einem Einlassdruck der Zahnradstufe zum niedrigeren Druckabschnitt der Rückseitenfläche von jedem Lagerblock zu transportieren; und
**dass** das Druckregelventil (76) derart ausgelegt ist, dass der Fluiddruck im höheren Fluiddruckabschnitt bei Verwendung durch das Druckregelventil zwischen dem Einlassdruck und einem Förderdruck der Zahnradstufe einstellbar ist, um die Hydrauliklast zu variieren.

2. Zahnradpumpe gemäß Anspruch 1, wobei in der Rückseitenfläche eine Nase ausgebildet ist, und die Nase die Abdichtung trägt.

3. Zahnradpumpe gemäß Anspruch 1 oder 2, wobei der Fluiddruck im höheren Fluiddruckabschnitt der Rückseitenfläche des Lagerblocks durch das Ventil einstellbar ist, um die Hydrauliklast zu variieren.

4. Zahnradpumpe gemäß einem der obigen Ansprüche, wobei das Druckregelventil ein variables Drosselventil ist.

5. Zahnradpumpe gemäß einem der obigen Ansprüche, wobei der höhere Fluiddruckabschnitt radial nach außen von der Abdichtung angeordnet ist.

6. Zahnradpumpe gemäß einem der obigen Ansprüche, wobei der druckbelastete Zahnradpumpenlagerblock ferner eines oder mehrere elastische Vorspannelemente (70) aufweist, die auf der Rückseitenfläche des Lagerblocks angeordnet sind, die eine zusätzliche Kraft bereitstellen, welche die Schubkraft des Lagerblocks in Richtung der Seitenfläche des Zahnrads drückt.

7. Zahnradpumpe gemäß Anspruch 6, wobei das oder jedes elastische Vorspannelement eine Schraubenfeder ist.

8. Zahnradpumpe gemäß Anspruch 7, wobei die oder jede Feder in eine jeweilige Aussparung (72) eingesetzt ist, die in der Rückseitenfläche des druckbelasteten Lagerblocks ausgebildet ist.

9. Treibstoffzufuhrsystem eines Gasturbinenmotors, der die Zahnradpumpe gemäß einem der obigen Ansprüche zum Pumpen von Treibstoff aufweist.

10. Treibstoffzufuhrsystem gemäß Anspruch 9, ferner aufweisend eine Steuerungseinheit zum Steuern des Druckregelventils, um den Fluiddruck im höheren Fluiddruckabschnitt einzustellen, sodass der Fluiddruck im höheren Fluiddruckabschnitt jeden beliebigen Wert in einem kontinuierlichen Bereich vom Einlassdruck zum Förderdruck der Zahnradstufe annehmen kann.

11. Treibstoffzufuhrsystem gemäß Anspruch 9, ferner aufweisend eine elektronische Steuerungseinheit zum Steuern des Druckregelwertes der Zahnradpumpe.

12. Treibstoffzufuhrsystem gemäß Anspruch 9, wobei das Druckregelventil der Zahnradpumpe durch den Druckanstieg an einer Zahnradstufe der Pumpe gesteuert wird.

13. Treibstoffzufuhrsystem gemäß Anspruch 9, wobei das Druckregelventil der Zahnradpumpe durch einen Zahnradstufen-Einlassdruck gesteuert wird.

14. Gasturbinenmotor (10), der das Treibstoffzufuhrsystem nach einem der Ansprüche 9 bis 13 aufweist.

## Revendications

1. Pompe à engrenages comportant au moins un étage d'engrenages comprenant une paire d'engrenages engrenés (44, 45 ; 46, 47) avec des arbres de palier des engrenages engrenés supportés par des blocs de palier de pompe à engrenages chargé en pression respectifs (50), chaque bloc de palier chargé en pression ayant :
un alésage adapté pour recevoir l'arbre de palier d'un engrenage de la pompe ;
une face de poussée à une première extrémité adapté pour venir en prise de manière coulissante avec une surface latérale de l'engrenage, et une face arrière opposée à l'autre extrémité, la pompe étant adaptée de sorte qu'en utilisation, un fluide sous pression est fourni à la face arrière pour fournir une charge hydraulique poussant la face de poussée du bloc de palier vers la surface latérale de l'engrenage ; et
un joint d'étanchéité (74) porté par la face arrière, le joint d'étanchéité, en utilisation, séparant des parties de pression de fluide supérieure (63) et de pression de fluide inférieure (65) de la face arrière ;
dans lequel la pompe à engrenages comporte en outre une vanne de régulation de pression (76) ;
**caractérisée en ce que** :
la pompe à engrenages est configurée pour diriger du fluide à une pression d'entrée de l'étage d'engrenages vers la partie de pression de fluide inférieure de la face arrière de chaque bloc de palier ; et
la vanne de régulation de pression (76) est agencée de telle sorte qu'en utilisation, la pression de fluide dans la partie de pression de fluide supérieure est ajustable par la vanne de régulation de pression entre la pression d'entrée et une pression de distribution de l'étage d'engrenages pour faire varier ladite charge hydraulique.

2. Pompe à engrenages selon la revendication 1, dans laquelle un nez est formé dans la face arrière, le nez portant le joint d'étanchéité.

3. Pompe à engrenages selon la revendication 1 ou 2, dans laquelle la pression de fluide dans la partie de pression de fluide supérieure de la face arrière du bloc de palier est ajustable par l'intermédiaire de la vanne pour faire varier ladite charge hydraulique.

4. Pompe à engrenages selon l'une quelconque des revendications précédentes, dans laquelle la vanne de régulation de pression est une vanne à restriction variable.

5. Pompe à engrenages selon l'une quelconque des revendications précédentes, dans laquelle la partie de pression de fluide supérieure est située radialement vers l'extérieur du joint d'étanchéité.

6. Pompe à engrenages selon l'une quelconque des revendications précédentes, dans laquelle le bloc de palier de pompe à engrenages chargé en pression comporte en outre un ou plusieurs éléments de sollicitation élastique (70) disposés sur la face arrière du bloc de palier, lesquels fournissent une force supplémentaire poussant la face de poussée du bloc de palier vers la surface latérale de l'engrenage.

7. Pompe à engrenages selon la revendication 6, dans laquelle le ou chaque élément de sollicitation élastique est un ressort hélicoïdal.

8. Pompe à engrenages selon la revendication 7, dans laquelle le ou chaque ressort est établi dans un évidement respectif (72) formé dans la face arrière du bloc de palier chargé en pression.

9. Système d'alimentation en carburant d'un moteur à turbine à gaz comportant la pompe à engrenages selon l'une quelconque des revendications précédentes pour un pompage de carburant.

10. Système d'alimentation en carburant selon la revendication 9, comportant en outre un dispositif de commande pour commander la vanne de régulation de pression afin d'ajuster la pression de fluide dans la partie de pression de fluide supérieure de telle sorte que la pression de fluide dans la partie de pression de fluide supérieure puisse prendre toute valeur dans une plage continue allant de la pression d'entrée à la pression de distribution de l'étage d'engrenages.

11. Système d'alimentation en carburant selon la revendication 9, comportant en outre un dispositif de commande électronique pour commander la valeur de régulation de pression de la pompe à engrenages.

12. Système d'alimentation en carburant selon la revendication 9, dans lequel la vanne de régulation de pression de la pompe à engrenages est commandée par la montée en pression dans un étage à engrenages de la pompe.

13. Système d'alimentation en carburant selon la revendication 9, dans lequel la vanne de régulation de pression de la pompe à engrenages est commandée par une pression d'entrée d'étage à engrenages.

14. Moteur à turbine à gaz (10) comportant le système d'alimentation en carburant selon l'une quelconque des revendications 9 à 13.
